# EUROPEAN PATENT APPLICATION

(11) **EP 3 531 626 A1**
(43) Date of publication of application: **28.08.2019**
(21) Application number: 18158322.0
(22) Date of filing: 23.02.2018
(51) Int. Cl.: H04L 12/26, H04L 29/06, H04L 29/08

(54) **DEVICE, METHOD, AND COMPUTER PROGRAM FOR IDENTIFYING APPLICATION TRIGGERED CONNECTIONS**

(71) Applicant: Rohde & Schwarz GmbH & Co. KG, 81671 München (DE)
(72) Inventor: Ekambaram, Prabhakaran, 768964 Singapore (SG); Khurana, Hanush, 81827 Munich (DE)
(74) Representative: Körfer, Thomas

(57) **Abstract**

A device (10) for identifying application triggered connections in data networks is provided. The device (10) comprises an interface (11) connectable to a signalling data module (14) of a network emulator (13) or a base station or user equipment, and an interface (12) connectable to a packet oriented data module (15) of the network emulator (13) or the base station or the user equipment. In this context, the device (10) is configured to identify a first data packet after a completed connection establishment signalling.

## Description

The invention relates to a device, method, and computer program for identifying application triggered connections in data networks.

Generally, in times of an increasing number of data networks and subscribers thereof which typically run a multitude of applications triggering various connections, there is a growing need of a device, method, and computer program for identifying application triggered connections in data networks especially in order to optimize said data networks with respect to efficiency.

US 2014/0219123 A1 discloses a test apparatus and method for testing IP-based (Internet Protocol) mobile communications terminals. The test apparatus comprises a first communications interface via which the test apparatus can be connected to the Internet, a second communications interface via which the test apparatus can be connected to an IP-based mobile communications terminal under test, and a test unit, which is designed to test IP-based applications provided in a mobile communications terminal under test that is connected to the Internet via the first and second communications interfaces. However, with the aid of said test apparatus and method, it is not possible to identify, especially to automatically identify, application triggered connections in data networks.

There is the object to provide a device, a method and a computer program for identifying application triggered connections in data networks in an efficient manner.

This object is solved by the features of claim 1 for a device for identifying application triggered connections in data networks, the features of claim 8 for the method and the features of claim 15 for the computer program. The dependent claims contain further developments.

According to a first aspect of the invention, a device for identifying application triggered connections in data networks is provided. The device comprises an interface connectable to a signalling data module of a network emulator or a base station or user equipment, and an interface connectable to a packet oriented data module of the network emulator or the base station or the user equipment. In this context, the device is configured to identify a first data packet after a completed connection establishment signalling. Advantageously, application triggered connections in data networks can automatically be identified in an efficient manner.

According to a first preferred implementation form of the first aspect, the device is further configured to analyze the first data packet. Advantageously, with the aid of further information with respect to the first data packet, network optimization can be performed in an efficient manner.

According to a further preferred implementation form of the first aspect, the device is further configured to determine if the first data packet is a request, especially a Domain Name System query. Additionally or alternatively, the device is further configured to determine if the first data packet is payload, especially an Internet Protocol packet. Advantageously, in this manner, the data network can further be optimized.

According to a further preferred implementation of the first aspect, the device is further configured to extract address information and/or name information for the Domain Name System query and to indicate it to the user. Additionally or alternatively, the device is further configured to extract address information and/or name information for the Internet Protocol packet and to indicate it to the user. Advantageously, accuracy of identification of application triggered connections in data networks can be increased.

According to a further preferred implementation form of the first aspect, the device is further configured to identify the first Internet Protocol packet, especially a Packet Data Convergence Protocol data packet. Advantageously, accuracy of identification of application triggered connections in data networks can further be increased.

According to a further preferred implementation form of the first aspect, the device is further configured to proceed with identifying the first Internet Protocol packet, especially the Packet Data Convergence Protocol data packet, upon a connection establishment cause, preferably in the form of a device under test originated data transfer, more preferably in the form of a subscriber originated data transfer, most preferably in the form of a mobile originated data transfer. Advantageously, errors can be reduced.

According to a further preferred implementation form of the first aspect, the device is further configured to check if a connection, especially a Radio Resource Control connection, is made for a data transfer, preferably for a device under test originated data transfer, more preferably for a subscriber originated data transfer, most preferably for a mobile originated data transfer. Advantageously, errors can further be reduced.

According to a second aspect of the invention, a method for identifying application triggered connections in data networks, especially by use of the device according to the first aspect of the invention, is provided. The method comprises the step of identifying a first data packet after a completed connection establishment signalling with respect to a network emulator or a base station or user equipment. Advantageously, application triggered connections in data networks can automatically be identified in an efficient manner.

According to a first preferred implementation form of the second aspect, the method further comprises the step of analyzing the first data packet. Advantageously, with the aid of further information with respect to the first data packet, network optimization can be performed in an efficient manner.

According to a further preferred implementation form of the second aspect, the method further comprises the step of determining if the first data packet is a request, especially a Domain Name System query. Additionally or alternatively, the method further comprises the step of determining if the first data packet is payload, especially an Internet Protocol packet. Advantageously, in this manner, the data network can further be optimized.

According to a further preferred implementation form of the second aspect, the method further comprises the step of extracting address information and/or name information for the Domain Name System query and to indicate it to the user. Additionally or alternatively, the method further comprises the step of extracting address information and/or name information for the Internet Protocol packet and to indicate it to the user. Advantageously, accuracy of identification of application triggered connections in data networks can be increased.

According to a further preferred implementation form of the second aspect, the method further comprises the step of identifying the first Internet Protocol packet, especially a Packet Data Convergence Protocol data packet. Advantageously, accuracy of identification of application triggered connections in data networks can further be increased.

According to a further preferred implementation form of the second aspect, the method further comprises the step of proceeding with identifying the first Internet Protocol packet, especially the Packet Data Convergence Protocol data packet, upon a connection establishment cause, preferably in the form of a device under test originated data transfer, more preferably in the form of a subscriber originated data transfer, most preferably in the form of a mobile originated data transfer. Advantageously, errors can be reduced.

According to a further preferred implementation form of the second aspect, the method further comprises the step of checking if a connection, especially a Radio Resource Control connection, is made for a data transfer, preferably for a device under test originated data transfer, more preferably for a subscriber originated data transfer, most preferably for a mobile originated data transfer. Advantageously, errors can further be reduced.

According to a third aspect of the invention, a computer program with program code means is provided to make all steps of the method according to the second aspect of the invention, if the program is loaded on a computer or digital signal processor or a measurement device. Advantageously, application triggered connections in data networks can automatically be identified in an efficient manner.

Exemplary embodiments of the invention are now further explained with respect to the drawings by way of example only, and not for limitation. In the drawings:
- Fig. 1: shows an exemplary embodiment of a device according to the first aspect of the invention; and
- Fig. 2: shows a flow chart of an exemplary embodiment of the second aspect of the invention.

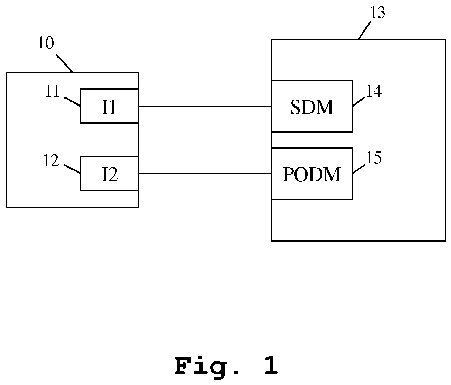

Fig. 1 shows an exemplary embodiment of a device 10 according to the first aspect of the invention. Said device 10 for identifying application triggered connections in data networks comprises a first interface 11 connectable to a signalling data module 14 of a network emulator 13. Alternatively, the network emulator 13 may be a base station or user equipment.

Furthermore, the device 10 additionally comprises a second interface 12 connectable to a packet oriented data module 15 of the network emulator 13. Alternatively, as already mentioned above, the network emulator 13 may be a base station or user equipment. In addition to this, it is noted that the device 10 may comprise solely a single interface comprising said interfaces 11 and 12.

Moreover, the device 10 is configured to identify a first data packet after a completed connection establishment signalling. In this context, the device 10 may further be configured to analyze said first data packet.

Additionally, the device 10 may further be configured to determine if the first data packet is a request, especially a Domain Name System query. In addition to this or as an alternative, the device 10 may further be configured to determine if the first data packet is payload, especially an Internet Protocol packet.

In this context, the device 10 may further be configured to extract address information and/or name information for the Domain Name System query and to indicate it to the user. Additionally or alternatively, the device 10 may further be configured to extract address information and/or name information for the Internet Protocol packet and to indicate it to the user.

Furthermore, the device 10 may further be configured to identify the first Internet Protocol packet, especially a Packet Data Convergence Protocol data packet.

In addition to this, the device 10 may further be configured to proceed with identifying the first Internet Protocol packet, especially the Packet Data Convergence Protocol data packet, upon a connection establishment cause, preferably in the form of a device under test originated data transfer, more preferably in the form of a subscriber originated data transfer, most preferably in the form of a mobile originated data transfer.

In this context, the device 10 may further be configured to check if a connection, especially a Radio Resource Control connection, is made for a data transfer, preferably for a device under test originated data transfer, more preferably for a subscriber originated data transfer, most preferably for a mobile originated data transfer.

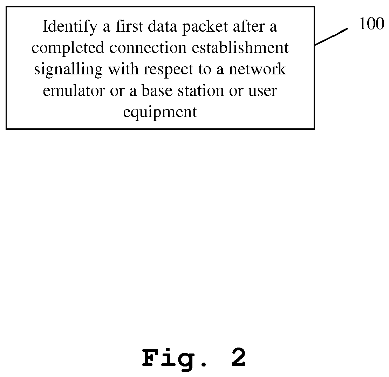

Moreover, Fig. 2 shows a flow chart of the inventive method. In a first step 100, a first data packet is identified after a completed connection establishment signalling with respect to a network emulator or a base station or user equipment. In this context, the method may further comprise the step of analyzing said first data packet.

In addition to this, the method may further comprise the step of determining if the first data packet is a request, especially a Domain Name System query. Additionally or alternatively, the method may further comprise the step of determining if the first data packet is payload, especially an Internet Protocol packet.

Additionally, the method may further comprise the step of extracting address information and/or name information for the Domain Name System query and to indicate it to the user. In addition to this or as an alternative, the method may further comprise the step of extracting address information and/or name information for the Internet Protocol packet and to indicate it to the user.

Furthermore, the method may further comprise the step of identifying the first Internet Protocol packet, especially a Packet Data Convergence Protocol data packet.

In this context, the method may further comprise the step of proceeding with identifying the first Internet Protocol packet, especially the Packet Data Convergence Protocol data packet, upon a connection establishment cause, preferably in the form of a device under test originated data transfer, more preferably in the form of a subscriber originated data transfer, most preferably in the form of a mobile originated data transfer.

In addition to this, the method may further comprise the step of checking if a connection, especially a Radio Resource Control connection, is made for a data transfer, preferably for a device under test originated data transfer, more preferably for a subscriber originated data transfer, most preferably for a mobile originated data transfer.

Finally, in addition to the explanations above and in accordance with the present invention, a further exemplary embodiment of the method is provided in the following. In this context, it is to be understood that both the inventive device may be configured to perform at least one of the steps described below and the inventive computer program may make at least one of said steps. Additionally, it is noted that some of the following steps may be performed in parallel and/or the order of the steps may be adapted to the actual use case. Therefore, the following order of the steps is used for example only and not for limitation of the present invention.

Firstly, it may be checked if a connection, especially a Radio Resource Control connection, is made for a data transfer, preferably for a device under test originated data transfer, more preferably for a subscriber originated data transfer, most preferably for a mobile originated data transfer.

Then, especially with respect to the Radio Resource Control connection, the first Internet Protocol packet, preferably a Packet Data Convergence Protocol data packet, may be identified.

Furthermore, especially after Packet Data Convergence Protocol header decompression, Internet Protocol header information may be gotten.

Moreover, especially with respect to said Internet Protocol header information, it may be checked if it is a Domain Name System query.

In this context, if it is a Domain Name System query, it may be determined that a new application has started or triggered, respectively, a connection, especially a Radio Resource Control connection. In addition to this, on the basis of the Domain Name System query, a host name may be checked and then may be related to the respective application.

Otherwise, if it is not a Domain Name System query, it may be determined that an already connected application is requesting a connection, especially a Radio Resource Control connection. In this case, on the basis of the Internet Protocol address, the name of the respective application may be gotten.

While various embodiments of the present invention have been described above, it should be understood that they have been presented by way of example only, and not limitation. Numerous changes to the disclosed embodiments can be made in accordance with the disclosure herein without departing from the spirit or scope of the invention. Thus, the breadth and scope of the present invention should not be limited by any of the above described embodiments. Rather, the scope of the invention should be defined in accordance with the following claims and their equivalents.

Although the invention has been illustrated and described with respect to one or more implementations, equivalent alterations and modifications will occur to others skilled in the art upon the reading and understanding of this specification and the annexed drawings. In addition, while a particular feature of the invention may have been disclosed with respect to only one of several implementations, such feature may be combined with one or more other features of the other implementations as may be desired and advantageous for any given or particular application.

## Claims

1. A device (10) for identifying application triggered connections in data networks, the device (10) comprising:
an interface (11) connectable to a signalling data module (14) of a network emulator (13) or a base station or user equipment, and
an interface (12) connectable to a packet oriented data module (15) of the network emulator (13) or the base station or the user equipment,
wherein the device (10) is configured to identify a first data packet after a completed connection establishment signalling.

2. The device (10) according to claim 1,
wherein the device (10) is further configured to analyze the first data packet.

3. The device (10) according to claim 1 or 2,
wherein the device (10) is further configured to determine if the first data packet is a request, especially a Domain Name System query, and/or
wherein the device (10) is further configured to determine if the first data packet is payload, especially an Internet Protocol packet.

4. The device (10) according to claim 3,
wherein the device (10) is further configured to extract address information and/or name information for the Domain Name System query and to indicate it to the user, and/or wherein the device (10) is further configured to extract address information and/or name information for the Internet Protocol packet and to indicate it to the user.

5. The device (10) according to claim 3 or 4,
wherein the device (10) is further configured to identify the first Internet Protocol packet, especially a Packet Data Convergence Protocol data packet.

6. The device (10) according to claim 5,
wherein the device (10) is further configured to proceed with identifying the first Internet Protocol packet, especially the Packet Data Convergence Protocol data packet, upon a connection establishment cause, preferably in the form of a device under test originated data transfer, more preferably in the form of a subscriber originated data transfer, most preferably in the form of a mobile originated data transfer.

7. The device (10) according to any of the claims 1 to 6,
wherein the device (10) is further configured to check if a connection, especially a Radio Resource Control connection, is made for a data transfer, preferably for a device under test originated data transfer, more preferably for a subscriber originated data transfer, most preferably for a mobile originated data transfer.

8. A method for identifying application triggered connections in data networks, especially by use of any of claims 1 to 7, the method comprising the step of:
identifying a first data packet after a completed connection establishment signalling with respect to a network emulator or a base station or user equipment.

9. The method according to claim 8,
wherein the method further comprises the step of analyzing the first data packet.

10. The method according to claim 8 or 9,
wherein the method further comprises the step of determining if the first data packet is a request, especially a Domain Name System query, and/or
wherein the method further comprises the step of determining if the first data packet is payload, especially an Internet Protocol packet.

11. The method according to claim 10,
wherein the method further comprises the step of extracting address information and/or name information for the Domain Name System query and to indicate it to the user, and/or
wherein the method further comprises the step of extracting address information and/or name information for the Internet Protocol packet and to indicate it to the user.

12. The method according to claim 10 or 11,
wherein the method further comprises the step of identifying the first Internet Protocol packet, especially a Packet Data Convergence Protocol data packet.

13. The method according to claim 12,
wherein the method further comprises the step of proceeding with identifying the first Internet Protocol packet, especially the Packet Data Convergence Protocol data packet, upon a connection establishment cause, preferably in the form of a device under test originated data transfer, more preferably in the form of a subscriber originated data transfer, most preferably in the form of a mobile originated data transfer.

14. The method according to any of the claims 8 to 13,
wherein the method further comprises the step of checking if a connection, especially a Radio Resource Control connection, is made for a data transfer, preferably for a device under test originated data transfer, more preferably for a subscriber originated data transfer, most preferably for a mobile originated data transfer.

15. Computer program with program code means to make all steps of any of claims 8 to 14, if the program is loaded on a computer or digital signal processor or a measurement device.

## Amended claims

### Amended claims in accordance with Rule 137(2) EPC.

1. A device (10) for identifying application triggered connections in data networks, the device (10) comprising:
an interface (11) connectable to a signalling data module (14) of a network emulator (13) or a base station or user equipment, and
an interface (12) connectable to a packet oriented data module (15) of the network emulator (13) or the base station or the user equipment,
wherein the device (10) is configured to identify a first data packet after a completed connection establishment signalling,
**characterized in that**
the device (10) is further configured to determine if the first data packet is an Internet Protocol packet, and
the device (10) is further configured to identify a Packet Data Convergence Protocol data packet.

2. The device (10) according to claim 1,
wherein the device (10) is further configured to analyze the first data packet.

3. The device (10) according to claim 1 or 2,
wherein the device (10) is further configured to determine if the first data packet is a request, especially a Domain Name System query.

4. The device (10) according to claim 3,
wherein the device (10) is further configured to extract address information and/or name information for the Domain Name System query and to indicate it to the user, and/or wherein the device (10) is further configured to extract address information and/or name information for the Internet Protocol packet and to indicate it to the user.

5. The device (10) according to claim 1,
wherein the device (10) is further configured to proceed with identifying the Packet Data Convergence Protocol data packet, upon a connection establishment cause in the form of a device under test originated data transfer, preferably in the form of a subscriber originated data transfer, more preferably in the form of a mobile originated data transfer.

6. The device (10) according to any of the claims 1 to 5,
wherein the device (10) is further configured to check if a connection, especially a Radio Resource Control connection, is made for a data transfer for a device under test originated data transfer, preferably for a subscriber originated data transfer, more preferably for a mobile originated data transfer.

7. A method for identifying application triggered connections in data networks, especially by use of any of claims 1 to 6, the method comprising the steps of:
identifying a first data packet after a completed connection establishment signalling with respect to a network emulator or a base station or user equipment, **characterized by**
determining if the first data packet is an Internet Protocol packet, and
identifying a Packet Data Convergence Protocol data packet.

8. The method according to claim 7,
wherein the method further comprises the step of analyzing the first data packet.

9. The method according to claim 7 or 8,
wherein the method further comprises the step of determining if the first data packet is a request, especially a Domain Name System query.

10. The method according to claim 9,
wherein the method further comprises the step of extracting address information and/or name information for the Domain Name System query and to indicate it to the user, and/or
wherein the method further comprises the step of extracting address information and/or name information for the Internet Protocol packet and to indicate it to the user.

11. The method according to claim 7,
wherein the method further comprises the step of proceeding with identifying the Packet Data Convergence Protocol data packet, upon a connection establishment cause in the form of a device under test originated data transfer, preferably in the form of a subscriber originated data transfer, more preferably in the form of a mobile originated data transfer.

12. The method according to any of the claims 7 to 11,
wherein the method further comprises the step of checking if a connection, especially a Radio Resource Control connection, is made for a data transfer for a device under test originated data transfer, preferably for a subscriber originated data transfer, more preferably for a mobile originated data transfer.

13. Computer program with program code means to make all steps of any of claims 7 to 12, if the program is loaded on a computer or digital signal processor or a measurement device.
